# EUROPÄISCHE PATENTSCHRIFT

(11) **EP 1 238 734 B1**
(45) Veröffentlichungstag und Bekanntmachung des Hinweises auf die Patenterteilung: **06.06.2007**
(21) Anmeldenummer: 01123943.1
(22) Anmeldetag: 08.10.2001
(51) Int. Cl.: B23C 5/22, B23D 61/04

(54) **Drehend antreibbares Schneidwerkzeug, insbesondere zum Fräsen und Sägen**
Rotatingly drivable cutting tool, especially for milling or sawing
Outils rotatif, en particulier par le fraisage ou le sciage

(30) Priorität: 16.10.2000 DE 20017747 U
(43) Veröffentlichungstag der Anmeldung: 11.09.2002
(73) Patentinhaber: Holler, Karl-Heinz, 61203 Reichelsheim 1 (DE)
(72) Erfinder: Holler, Karl-Heinz, 61203 Reichelsheim 1 (DE)
(74) Vertreter: Haar, Lucas Heinz Jörn

(56) Entgegenhaltungen:
- EP-A- 0 404 110
- CH-A- 685 680
- DE-A- 2 226 245

## Beschreibung

Die Erfindung betrifft ein drehend antreibbares Schneidwerkzeug der im Oberbegriff des Anspruchs 1 angegebenen Art. Ein derartiges Schneidwerkzeug ist aus CH-A-685680 bekannt.

Bei dem aus CH-A-685680 bekannten Schneidwerkzeug haben die zweiten Backen des Schneidenträgers einen elastisch verformbaren Abschnitt, der durch einen radialen Einschnitt im Schneidenträger gebildet ist. In dem Einschnitt ist ein Einsatz mit einer Spannschraube angeordnet, durch welche der elastisch verformbare Abschnitt gegen eine Spannfläche der Schneide spannbar ist. Durch den Einschnitt wird der Schneidenträger geschwächt und seine Herstellung verteuert.

Aus EP-A-0938941 ist ein spanabhebendes Werkzeug mit einem scheibenförmigen Schneidenträger bekannt, der eine zu seinem Rand hin offene, von gegenüberliegenden Backen begrenzte Ausnehmung zur Aufnahme eines zwischen den Backen festklemmbaren Schneideinsatzes hat. Ein Backen des Schneidenträgers weist eine aus zylindrischen Stiften bestehende seitliche Abstützung auf, die in eine Längsnut im des Schneideinsatzes eingreift.

Der Erfindung liegt die Aufgabe zugrunde, ein Schneidwerkzeug der angegebenen Art zu schaffen, welches einfach und kostengünstig herstellbar ist, ein einfaches Auswechseln der Schneideinsätze ermöglicht und eine sichere, auch für sehr hohe Drehzahlen geeignete Verankerung der Schneideinsätze gewährleistet.

Diese Aufgabe wird durch die im Patentanspruch 1 angegebene Erfindung gelöst. Weitere vorteilhafte Ausgestaltungen der Erfindung ergeben sich aus den Ansprüchen 2 bis 9.

Bei dem erfindungsgemäßen Schneidwerkzeug sind die zweiten Backen, an denen die Spannvorrichtung abgestützt ist, über Druckbelastung aufnehmende Abschnitte des Schneidenträgers mit den ersten Backen der benachbarten Ausnehmungen verbunden. Auf diese Weise bilden die Schneideinsätze mit den Spannvorrichtungen und den dazwischenliegenden Abschnitten des Schneidenträgers einen druckfesten Ring, der sowohl die Spannkräfte der Spannvorrichtungen als auch die Schneidkräfte aufnimmt und auf Grund seiner Formsteifigkeit eine sichere und auch für hohe Drehzahlen geeignete Einspannung der Schneideinsätze gewährleistet. Als Spannvorrichtungen werden Spannschrauben verwendet, die in einer tangential zur Drehachse verlaufenden Bohrung im Schneidenträger angeordnet sind und unmittelbar gegen die zweite Spannfläche der Schneideinsätze gespannt werden. Die Bohrungsgewinde zum Einschrauben der Spannschrauben können entweder in Bohrungen des Schneidenträgers oder in einzelnen in den Schneidenträger eingesetzten Elementen ausgebildet sein. Letzteres ist vor allem zweckmäßig, wenn die Herstellung einer Gewindebohrung im Schneidenträger zu aufwendig ist. Wird die Spannschraube in ein in den Schneidenträger eingesetztes Element eingeschraubt, so kann dieses Element durch geeignete Werkstoffauswahl auch zur Dämpfung von Schwingungen des Schneidenträgers dienen.

Als vorteilhaft hat sich weiterhin eine Ausgestaltung erwiesen, bei der die Schneideinsätze in den Ausnehmungen spielfrei zwischen parallelen Anlageflächen der ersten und zweiten Backen angeordnet sind. Hierdurch werden die auf die Schneideinsätze einwirkenden Schneidkräfte zu einem wesentlichen Teil unmittelbar an den Anlageflächen der Backen abgestützt und die Belastung der Spannvorrichtung reduziert.

Ausführungsbeispiele der Erfindung sind in der Zeichnung dargestellt und werden im folgenden näher beschrieben. Es zeigen
- Figur 1: eine Seitenansicht eines erfindungsgemäßen Schneidwerkzeugs, teilweise geschnitten,
- Figur 2: einen Ausschnitt einer ersten Variante des Schneidwerkzeugs gemäß Figur 1,
- Figur 3: einen Ausschnitt einer zweiten Variante des Schneidwerkzeugs gemäß Figur 1.

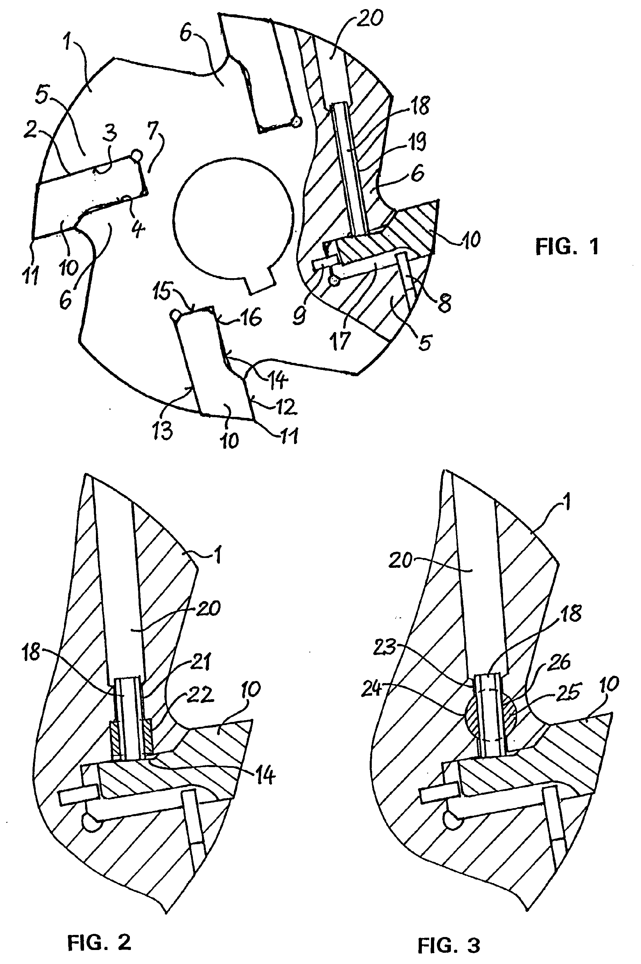

Das in Figur 1 gezeigte Schneidwerkzeug weist einen als zylindrische Kreisscheibe ausgebildeten Schneidenträger 1 auf, der an seinem Umfang in regelmäßigem Abstand vier zur Mantelfläche offene Ausnehmungen 2 hat. Jede Ausnehmung 2 weist an ihren Längsseiten parallele und zur Mittelebene des Schneidenträgers 1 rechtwinkelige Anlageflächen 3, 4 auf, die an einander gegenüberliegenden Backen 5, 6 angeordnet sind. Ein zu den Anlageflächen 3, 4 rechtwinkeliger Boden der Ausnehmung 2 bildet einen Anschlag 7. Aus der Anlagefläche 3 und dem Anschlag 7 ragen zylindrische Stifte 8, 9 heraus, die jeweils in eine Bohrung im Backen 5 bzw. im Anschlag 7 eingepreßt sind.

In den Ausnehmungen 2 befinden sich Schneideinsätze 10 mit einer Schneide 11, einer Spanfläche 12, einer ersten Spannfläche 13, einer zweiten Spannfläche 14, einer Anschlagfläche 15 und einer Abstützfläche 16. In der Spannfläche 13 und der Anschlagfläche 15 sind im Querschnitt rechteckige Längsnuten 17 ausgebildet, deren Breite gleich dem Durchmesser der Stifte 8, 9 ist. Die der Spannfläche 13 gegenüberliegende Spannfläche 14 ist zur Spannfläche 13 derart geneigt, daß der Abstand zwischen den Spannflächen mit der Entfernung der Schneide 11 zunimmt. Die Abstützfläche 16 befindet sich auf der der Schneide 11 abgekehrten Seite der Spannfläche 14 und ist zur Spannfläche 13 parallel. Der Abstand zwischen der Spannfläche 13 und der Abstützfläche 16 ist gleich dem Abstand der Anlageflächen 3, 4, wobei die Maßtoleranzen so gewählt sind, daß der Schneideinsatz von Hand in der Ausnehmung 2 verschiebbar ist.

Zum Festspannen der Schneideinsätze 10 in den Ausnehmungen 2 sind an den Backen 6 Spannvorrichtungen vorgesehen. Die Spannvorrichtungen bestehen jeweils aus einer Spannschraube 18, die in eine tangential zur Drehachse und senkrecht zur Spannfläche 14 verlaufende, den Backen 6 durchdringende Gewindebohrung 19 eingeschraubt ist. An die Gewindebohrung 19 schließt sich eine Bohrung 20 an, die den Backen 5 der benachbarten Ausnehmung 2 durchdringt und zum Heranführen eines Schraubendrehers an die Spannschraube dient.

Ist die Herstellung einer Gewindebohrung im Schneidenträger 1 zu aufwendig, so kann der Schneidenträger 1, wie in Figur 2 gezeigt, stattdessen mit einer Stufenbohrung 21 versehen sein, in die von der Ausnehmung 2 aus, eine mit einer Gewindebohrung versehene Hülse 22 eingesetzt ist, wobei sich die Hülse 22 nach innen an einer Stufe der Stufenbohrung 21 abstützt. In die Gewindebohrung der Hülse 22 wird dann durch die sich an die Stufenbohrung 21 anschließende Bohrung 20 die Spannschraube 18 eingeschraubt und gegen die Spannfläche 14 des Schneideinsatzes 10 gespannt. Zwischen der Hülse 22 und der Stufe der Stufenbohrung 21 kann hierbei ein Federring angeordnet sein, der die gespannte Spannschraube 18 permanent mit einer Federkraft belastet.

Bei der in Figur 3 gezeigten Ausführungsvariante ist anstelle der Gewindebohrung 19 eine glatte Bohrung 23 vorgesehen, deren Außendurchmesser geringfügig größer ist als der Außendurchmesser der Spannschraube 18. Die Bohrung 23 kreuzt mittig eine zur Drehachse des Schneidenträgers parallele Querbohrung 24, deren Durchmesser etwa doppelt so groß ist wie der Durchmesser der Bohrung 23. In der Querbohrung 24 befindet sich ein zylindrischer Einsatz 25 von etwa gleichem Durchmesser, der eine die Zylinderachse in der Mitte rechtwinklig kreuzende Gewindebohrung 26 aufweist. Die axiale Länge des Einsatzes 25 ist kleiner oder gleich der Dicke des Schneidenträgers 1. Die Spannschraube 18 ist in die Gewindebohrung 26 eingeschraubt und hält mit ihren in der Bohrung 23 befindlichen Enden den Einsatz 25 in der Querbohrung 24 formschlüssig fest. Diese Ausführungsform hat den Vorteil, daß sie besonders einfach herstellbar ist und daß der Schneidenträger vergleichsweise dünn sein kann.

## Patentansprüche

1. Drehend antreibbares Schneidwerkzeug, insbesondere zum Fräsen oder Sägen, mit einem scheibenförmigen Schneidenträger (1), der mehrere zu seinem Rand hin offene Ausnehmungen (2) mit einander gegenüberliegenden, ersten und zweiten Backen (5, 6) aufweist, wobei in jeder Ausnehmung zwischen den ersten und zweiten Backen ein auswechelbarer Schneideinsatz (10) festspannbar ist, der an seinem vorderen Ende eine Schneide (11) und an seinem hinteren Ende eine an einem Anschlag (7) in der jeweiligen Ausnehmung (2) anliegende Anschlagfläche (15) hat und an dem benachbarten ersten Backen (5) mit einer sich in Längsrichtung der Ausnehmung erstreckenden ersten Spannfläche (13) gelagert ist, in der eine Längsnut (17) mit zur gemeinsamen Mittelebene von Schneideinsatz (10) und Schneidenträger (1) im wesentlichen parallelen Seitenflächen ausgebildet ist, wobei die ersten Backen (5) eine aus einem oder mehreren Vorsprüngen gebildete seitliche Abstützung haben, die in die Längsnut (17) eingreift und an beiden Seitenflächen der Längsnut (17) anliegt, wobei an den zweiten Backen (6) Spannvorrichtungen angeordnet sind, die sich in der Spannstellung an einer zweiten Spannfläche (14) des jeweiligen Schneideinsatzes (10) und an dem jeweils zweiten Backen abstützen und wobei die zweite Spannfläche (14) zur ersten Spannfläche (13) eine solche Neigung hat, daß der Abstand zwischen den Spannflächen mit der Entfernung von der Schneide (11) zunimmt, wobei die zweiten Backen (6) und die ersten Backen (5) jeweils benachbarter Ausnehmungen (2) durch Abschnitte des Schneidenträgers (1) verbunden sind, die durch die Kräfte der Spannvorrichtungen einer Druckbelastung ausgesetzt sind, **dadurch gekennzeichnet, daß** die Spannvorrichtungen eine Spannschraube (18) haben, die in einer tangential zur Drehachse des Schneidenträgers (1) ausgerichteten, den zweiten Backen (6) durchdringenden Bohrung angeordnet und gegen die zweite Spannfläche (14) des Schneideinsatzes (10) spannbar ist.

2. Schneidwerkzeug nach Anspruch 1, **dadurch gekennzeichnet, daß** in der Anschlagfläche (15) und/oder der den zweiten Backen (6) zugekehrten zweiten Spannfläche (13) des Schneideinsatzes (10) eine Ausnehmung mit zur Mittelebene des Schneideinsatzes (10) parallelen Seitenflächen vorgesehen ist, in die ein an dem Anschlag und/oder den zweiten Backen angebrachter Vorsprung spielfrei eingreift.

3. Schneidwerkzeug nach Anspruch 2, **dadurch gekennzeichnet, daß** die Vorsprünge im Schneidenträger (1) durch zylindrische Stifte (8, 9) gebildet werden, die in Bohrungen im Schneidenträger (1) eingepreßt sind.

4. Schneidwerkzeug nach einem der Ansprüche 1 bis 3, **dadurch gekennzeichnet, daß** die Spannschraube (18) in eine Gewindebohrung (19) im Schneidenträger (1) eingeschraubt ist.

5. Schneidwerkzeug nach Anspruch 1, **dadurch gekennzeichnet, daß** die Spannschraube (18) in die Gewindebohrung einer Hülse (22) eingeschraubt ist, die von der Ausnehmung (2) aus in eine tangentiale Stufenbohrung (21) des Schneidenträgers (1) eingesetzt ist.

6. Schneidwerkzeug nach Anspruch 1, **dadurch gekennzeichnet, daß** die Spannschraube (18) in die Gewindebohrung (26) eines Einsatzes (25) eingeschraubt ist, der in eine den Schneidenträger (1) durchdringende, achsparallele Ausnehmung eingesetzt ist.

## Claims

1. Rotatingly drivable cutting tool, especially for milling or sawing, comprising a disc-shaped cutting carrier (1) having a plurality of recesses (2) which are open toward the edge of the cutting carrier and have mutually opposed first and second jaws (5, 6), wherein there can be clamped in each recess, between the first and second jaws, an exchangeable cutting insert (10) having at its leading end a cutting edge (11) and at its trailing end a stop face (15) which rests against a stop (7) in each recess (2) and being mounted on the adjacent first jaw (5) with a first clamping face (13) which extends in the longitudinal direction of the recess and in which a longitudinal groove (17) is formed with lateral faces substantially parallel to the common centre plane of the cutting insert (10) and cutting carrier (1), the first jaws (5) having a lateral support which is formed from one or more projections, engages with the longitudinal groove (17) and rests against both lateral faces of the longitudinal groove (17), there being arranged on the second jaws (6) clamping devices which are supported in the clamping position on a second clamping face (14) of each cutting insert (10) and on each second jaw, and the second clamping face (14) being inclined relative to the first clamping face (13) such that the distance between the clamping faces increases moving away from the cutting edge (11), the second jaws (6) and the first jaws (5) of respective adjacent recesses (2) being connected by portions of the cutting carrier (1) that are exposed to a compressive load as a result of the forces of the clamping devices, **characterised in that** the clamping devices have a clamping screw (18) which is arranged in a hole oriented tangentially to the axis of rotation of the cutting carrier (1) and penetrating the second jaw (6) and can be clamped against the second clamping face (14) of the cutting insert (10).

2. Cutting tool according to claim 1, **characterised in that** there is provided in the stop face (15) and/or the second clamping face (13), facing the second jaws (6), of the cutting insert (10) a recess having lateral faces which are parallel to the centre plane of the cutting insert (10) and with which a projection attached to the stop and/or the second jaws engages without play.

3. Cutting tool according to claim 2, **characterised in that** the projections in the cutting carrier (1) are formed by cylindrical pins (8, 9) which are pressed into holes in the cutting carrier (1).

4. Cutting tool according to any one of claims 1 to 3, **characterised in that** the clamping screw (18) is screwed into a tapped hole (19) in the cutting carrier (1).

5. Cutting tool according to claim 1, **characterised in that** the clamping screw (18) is screwed into the tapped hole in a sleeve (22) which is inserted, out of the recess (2), into a tangential stepped hole (21) in the cutting carrier (1).

6. Cutting tool according to claim 1, **characterised in that** the clamping screw (18) is screwed into the tapped hole (26) in an insert (25) which is inserted into an axis-parallel recess penetrating the cutting carrier (1).

## Revendications

1. Outil de coupe pouvant être entraîné en rotation, notamment pour fraiser ou scier, avec un porte-lame (1) en forme de disque qui présente plusieurs évidements (2) ouverts du côté de son bord avec des première et deuxième joues (5, 6) situées en face les unes des autres, un insert de coupe (10) échangeable pouvant être serré dans chaque évidement entre les premières et les deuxièmes joues, lequel insert de coupe a à son extrémité avant un lame (11) et à son extrémité arrière une surface de butée (15) reposant sur une butée (7) réalisée dans ledit évidement (2) et est logé sur la première joue adjacente (5) avec une première surface de serrage (13) s'étendant dans la direction longitudinale de l'évidement et dans laquelle est réalisée une gorge longitudinale (17) avec des surfaces latérales essentiellement parallèles au plan médian commun de l'insert de coupe (10) et du porte-lame (1), les premières joues (5) ayant un appui latéral, constitué d'une ou plusieurs saillies, qui pénètre dans la gorge longitudinale (17) et qui est adjacent aux deux surfaces latérales de la gorge longitudinale (17), des dispositifs de serrage étant disposés sur les deuxièmes joues (6) qui s'appuient en position de serrage sur une deuxième surface de serrage (14) de l'insert de coupe considéré (10) et sur la deuxième joue, et la deuxième surface de serrage (14) présente une inclinaison telle par rapport à la première surface de serrage (13) que la distance entre les surface de serrage augmente en s'éloignant du lame (11), les deuxièmes joues (6) et les premières joues (5) d'évidements (2) voisins étant reliés ensemble par des sections du porte-lame (1) qui sont soumises par les forces des dispositifs de serrage à une contrainte de pression, **caractérisé en ce que** les dispositifs de serrage ont une vis de serrage (18) disposée dans un alésage traversant la deuxième joue (6) et dirigé tangentiellement à l'axe de rotation du porte-lame (1) et pouvant être serré contre la deuxième surface de serrage (14)de l'insert de coupe (10)..

2. Outil de coupe selon la revendication 1, **caractérisé en ce que** dans la surface de butée (15) et/ou la deuxième surface de serrage (13) dirigée vers la deuxième joue (6) de l'insert de coupe (10), il est prévu un évidement avec des surfaces latérales au plan médian de l'insert de coupe (10), dans lequel s'engage sans jeu une saillie disposée sur la butée et/ou la deuxième joue.

3. Outil de coupe selon la revendication 2, **caractérisé en ce que** les saillies dans le porte-lame (1) sont formées par des pointes cylindriques (8, 9) qui sont enfoncées dans des trous réalisés dans le porte-lame (1).

4. Outil de coupe selon l'une des revendications 1 à 3, **caractérisé en ce que** la vis de serrage (18) est vissée dans un trou fileté (19) réalisé dans le porte-lame (1).

5. Outil de coupe selon la revendication 1, **caractérisé en ce que** la vis de serrage (18) est vissée dans un trou fileté d'un manchon (22) inséré depuis l'évidement (2) dans un trou en escalier tangentiel (21) du porte-lame (1).

6. Outil de coupe selon la revendication 1, **caractérisé en ce que** la vis de serrage (18) est vissée dans le trou fileté (26) d'un insert (26) inséré dans un évidement traversant le porte-lame (1) et parallèle à l'axe.
